(19) Europäisches Patentamt
European Patent Office
Office européen des brevets

(11) **EP 3 566 578 B1**

(12) **EUROPEAN PATENT SPECIFICATION**

(45) Date of publication and mention
of the grant of the patent:
**15.01.2025 Bulletin 2025/03**

(51) International Patent Classification (IPC):
*A01N 25/18* (2006.01)     *A01P 7/04* (2006.01)
*A01M 1/20* (2006.01)     *A01N 53/00* (2006.01)

(21) Application number: **17889583.5**

(22) Date of filing: **26.12.2017**

(52) Cooperative Patent Classification (CPC):
(C-Sets available)
**A01M 1/2044; A01M 1/2077; A01N 25/18**     (Cont.)

(86) International application number:
**PCT/JP2017/046609**

(87) International publication number:
**WO 2018/128124 (12.07.2018 Gazette 2018/28)**

(54) **METHOD OF CONTROLLING PESTS**

VERFAHREN ZUR SCHÄDLINGSBEKÄMPFUNG

PROCÉDÉ DE LUTTE CONTRE LES NUISIBLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2017 JP 2017000900**

(43) Date of publication of application:
**13.11.2019 Bulletin 2019/46**

(73) Proprietor: **Dainihon Jochugiku Co., Ltd.**
**Osaka 550-0001 (JP)**

(72) Inventors:
• **ITANO Taisuke**
**Toyonaka-shi**
**Osaka 561-0827 (JP)**
• **ICHIMURA Yumiko**
**Toyonaka-shi**
**Osaka 561-0827 (JP)**
• **KASHIMA Seiichi**
**Toyonaka-shi**
**Osaka 561-0827 (JP)**

• **HIKITSUCHI Tomoyuki**
**Toyonaka-shi**
**Osaka 561-0827 (JP)**
• **NAKAYAMA Koji**
**Toyonaka-shi**
**Osaka 561-0827 (JP)**

(74) Representative: **Cabinet Beau de Loménie**
**158, rue de l'Université**
**75340 Paris Cedex 07 (FR)**

(56) References cited:
**EP-A1- 3 409 117          WO-A1-2016/140172
WO-A1-2016/140172     WO-A1-2016/167209
WO-A1-2016/167209     WO-A1-2017/130920
WO-A1-2017/130920     WO-A1-2017/130921
WO-A1-2017/131073     AU-A1- 2012 200 592
JP-A- 2005 095 107      JP-A- 2005 095 107
JP-A- 2012 176 946      JP-A- 2012 176 947
JP-A- H11 103 750        JP-A- H11 103 750
JP-B2- 2 926 172          US-A1- 2013 303 610**

(52) Cooperative Patent Classification (CPC): (Cont.)

C-Sets
**A01N 25/18, A01N 53/00**

**Description**

TECHNICAL FIELD

The present invention relates to an insect pest control method.

Among flying insect pest control products for controlling flying insect pests such as mosquitoes are so-called "liquid mosquito killers," which are commercially available. Liquid mosquito killers utilize the technique of putting an absorbent wick in a chemical liquid containing an insecticidal component so that the chemical liquid is absorbed and transported to the top portion of the absorbent wick, and heating the absorbent wick so that the insecticidal component is vaporized and diffused into the atmosphere. The insecticidal component for liquid mosquito killers is typified by pyrethroid insecticidal components. Allethrin, prallethrin, furamethrin, etc., are conventionally the most commonly used pyrethroid insecticidal components, but lately there is a trend towards using newer pyrethroid insecticidal components such as transfluthrin, metofluthrin, and profluthrin, which have a higher insecticidal activity.

Among chemical liquids for use in liquid mosquito killers are kerosene-based formulations (referred to as "oil-based formulations") and water-based formulations. So far oil-based formulations have been used in most of globally available liquid mosquito killers. However, water-based formulations can have a lower risk of catching fire and can be easily made more effective in killing insect pests, compared to oil-based formulations. Therefore, it is envisaged that the demand for water-based formulations will increasingly grow in future.

Among conventional water-based flying insect pest control products is a thermal vaporization/diffusion water-based insecticide employing a chemical liquid containing a pyrethroid insecticidal component, a surfactant, and water (see, for example, Patent Document 1). In the case of a thermal vaporization/diffusion water-based insecticide disclosed in Patent Document 1, the chemical liquid is vaporized and diffused using a thermal vaporization/diffusion absorbent wick. The surfactant contained in the chemical liquid acts to maintain the proportions of the components of the chemical liquid so that the pyrethroid insecticidal component can be stably vaporized and diffused over a long period of time. JP 2005 095107 A, WO 2016/167209 A1, WO 2016/140172 A1, US 2013/303610 A1, AU 2012 200 592 A1, JP H11 103750 A, EP 3 409 117 A1, and WO 2017/130920 A1 disclose divers insect pest control products comprising: i) a hollow tube-shaped heat generator for heating the thermal vaporization/diffusion absorbent wick; ii) a thermal vaporization/diffusion absorbent wick for vaporizing and diffusing a water-based insecticidal composition; iii) the insecticidal composition containing a pyrethroid insecticidal, a glycol ether and water.

CITATION LIST

PATENT LITERATURE

Patent Document 1: Japanese Unexamined Patent Application Publication No. H03-7207

SUMMARY OF INVENTION

TECHNICAL PROBLEM

When a flying insect pest control product is used indoors, it is necessary to suitably adjust the concentration of the pyrethroid insecticidal component contained in vapor particles diffused from the flying insect pest control product in order to effectively enhance the action of the pyrethroid insecticidal component to control flying insect pests. To do so, it is necessary to determine the concentration of the pyrethroid insecticidal component contained in the diffused vapor particles, and understand a relationship between a change in the concentration and the control effect. However, because pyrethroid insecticidal components such as transfluthrin, metofluthrin, and profluthrin have a relatively high vapor pressure, it is particularly difficult to adjust the concentration of such a pyrethroid insecticidal component pyrethroid insecticidal component contained in the diffused vapor particles, and understand a relationship between a change in the concentration and the control effect. However, because pyrethroid insecticidal components such as transfluthrin, metofluthrin, and profluthrin have a relatively high vapor pressure, it is particularly difficult to adjust the concentration of such a pyrethroid insecticidal component in a flying insect pest control product employing a water-based chemical liquid.

In this regard, in the case of the thermal vaporization/diffusion water-based insecticide of JP H03-7207 A, vaporization/diffusion stability is enhanced by addition of a surfactant, and an attempt is made to maintain the concentration of the pyrethroid insecticidal component constant. According to JP H03-7207 A, there is no flying insect pest control product developed based on the idea of adjusting the concentration of the pyrethroid insecticidal component contained in the diffused vapor particles.

For an insect pest control product that comprises a thermal vaporization/diffusion absorbent wick which can be used for vaporization/diffusion of a chemical liquid containing a pyrethroid insecticidal component having a relatively vapor pressure, and that can effectively control flying insect pests, it is an object of the present invention to provide an insect pest control method that can be carried out using such an insect pest control product.

SOLUTION TO PROBLEM

The invention is directed to an insect pest control method using a pest control product, said method comprising: putting the thermal vaporization/diffusion absorbent wick in the water-based insecticidal composition so that the insecticidal composition is absorbed and transported to a top portion of the wick, and heating the top portion of the wick at 80 to 150°C so that a pyrethroid insecticidal component is vaporized and diffused into the atmosphere, wherein the wick is a baked wick and the insecticidal composition contains 0.1 to 3.0 mass % of the pyrethroid insecticidal component which is transfluthrin, 30 to 60 mass % of a glycol ether compound which is diethylene glycol monoalkyl ether and/or a glycol compound, said compounds having boiling point of 150 to 300°C, and water; wherein the product further comprises a hollow tube-shaped heat generator surrounding the wick and having a surface temperature set to 80 to 150°C for heating the wick, wherein an average gap distance between an outer surface of the wick and an inner surface of the heat generator is set to 1.2 to 1.8 mm, an inner diameter of an inner wall of the heat generator is 10 mm and a height (b) of the heat generator is set to 8 to 12 mm, and a ratio (a)/(b) of a length (a) of the top portion of the wick facing the inner wall of the heat generator to the height (b) of an inner wall of the heat generator is 0.7 to 0.8, wherein a concentration of the pyrethroid insecticidal component in diffused vapour particles one hour after the start of vaporization and diffusion is 1.5 to 18 times as high as a concentration of the pyrethroid insecticidal component in diffused vapour particles of initial vaporization and diffusion.

In the method using the insect pest control product thus configured, the water-based insecticidal composition contains suitable components and has suitable characteristics, and the pyrethroid insecticidal component contained in diffused vapor particles of the water-based insecticidal composition is effectively concentrated one hour after the start of vaporization and diffusion, and therefore, an excellent flying insect pest control effect can be sustained over a long period of time.

The diffused vapor particles one hour after the start of vaporization and diffusion preferably have an average particle size of 0.2-2.5 um, and therefore, an excellent flying insect pest control effect is obtained.

With diethylene glycol monoalkyl ether, an excellently sustainable flying insect pest control effect is obtained.

In the present invention, the pyrethroid insecticidal component is transfluthrin.

With this pyrethroid insecticidal component, an excellent flying insect pest control effect is obtained.

In the insect pest control product used in the present invention, the thermal vaporization/diffusion absorbent wick is heated by the hollow tube-shaped heat generator, and the height of the region where the outer surface of the thermal vaporization/diffusion absorbent wick and the inner surface of the hollow tube-shaped heat generator face each other is set to 0.7-0.8 times as great as the length of the hollow tube-shaped heat generator. Therefore, variations in the particle size of vapor particles vaporized and diffused from the thermal vaporization/diffusion absorbent wick are reduced, and as a result, the sustainability of the flying insect pest control effect can be further improved.

A surface temperature of the hollow tube-shaped heat generator is set to 80-150°C, and an average gap distance between an outer surface of the thermal vaporization/diffusion absorbent wick and an inner surface of the hollow tube-shaped heat generator is set to 1.2-1.8 mm.

With this surface temperature of the hollow tube-shaped heat generator, and this average gap distance between the outer surface of the thermal vaporization/diffusion absorbent wick and the inner surface of the hollow tube-shaped heat generator, high-quality diffused vapor particles can be generated, and the sustainability of the flying insect pest control effect can be further improved.

In the insect pest control product used in the present invention, the thermal vaporization/diffusion absorbent wick is a baked wick.

The thermal vaporization/diffusion absorbent wick is made of a suitable material, and therefore, an excellent flying insect pest control effect is obtained, and high durability is imparted to the insect pest control product.

In the present invention, the water-based insecticidal composition vaporized and diffused from the thermal vaporization/diffusion absorbent wick preferably prevents a flying insect pest from entering a room from the outside of the room.

Thus, the vaporized and diffused water-based insecticidal composition (diffused vapor particles) contains an effective amount of the pyrethroid insecticidal component, and therefore, opportunities of contacting flying insect pests are increased, and the effect of preventing flying insect pests from entering is enhanced. Therefore, for example, even when applied to a space of a room with an open window or door in a side wall thereof, the insect pest control method can effectively prevent flying insect pests from entering the room space from the outside of the room.

The present invention preferably prevents a flying insect pest from entering a room of at least 25 m$^3$ from the outside of the room for 30-90 days.

In the present invention's insect pest control method, an insect pest control product is used to vaporize and diffuse the water-based insecticidal composition, and therefore, an excellent flying insect pest control effect can be sustained over a long period of time.

DESCRIPTION OF EMBODIMENTS

An insect pest control product not according to the invention and an insect pest control method according to the present invention will now be described.

A pyrethroid insecticidal component having a vapor pressure of $2 \times 10^{-4}$ to $1 \times 10^{-2}$ mmHg at 30°C is e.g. transfluthrin, metofluthrin, profluthrin, empenthrin, terallethrin, meperfluthrin, heptafluthrin, 4-methoxymethyl-2,3,5,6-tetrafluorobenzyl-chrysanthemate, and 4-methoxymethyl-2,3,5,6-tetrafluorobenzyl-2,2-dimethyl-3-(2-chloro-2-trifluoromethylvinyl)cyclopropane carboxylate In the inventive method transfluthrin is used as the pyrethroid insecticidal component.

The content of the pyrethroid insecticidal component in the water-based insecticidal composition is 0.1-3.0 mass%. If the content is less than 0.1 mass%, the insect killing efficacy is likely to be low. Meanwhile, if the content is more than 3.0 mass%, the properties of the water-based insecticidal composition are likely to be impaired.

The water-based insecticidal composition is a water-based formulation, and therefore, water is used as a solvent for the water-based insecticidal composition. The water-based formulation can have a lower risk of catching fire and can be easily made more effective in killing insect pests, compared to oil-based formulations. In order to enable the insecticidal composition to be a water-based formulation, the insecticidal composition contains a diethylene glycol monoalkyl ether and/or glycol compound having a boiling point of 150-300°C, preferably 200-260°C, together with the pyrethroid insecticidal component and water. The present invention is premised on the feature that the diethylene glycol monoalkyl ether and/or glycol compound have the following actions: (1) solubilizing the pyrethroid insecticidal component; (2) having thermal vaporization and diffusion capability; and (3) mediating between the pyrethroid insecticidal component and water so that the three components are thermally vaporized and diffused from an absorbent wick while the ratio of the three components is maintained constant. In this regard, in order to achieve the object of the present invention, it is important to cause diffused vapor particles formed by vaporization and diffusion of the water-based insecticidal composition containing the above three components to behave such that the particles have increased opportunities of contacting flying insect pests and an enhanced effect of preventing flying insect pests from entering indoors. One of the factors in inducing such behavior is, for example, the average particle size of the diffused vapor particles. In general, diffused vapor particles of a water-based formulation tend to have a smaller average particle size in the case where a compound contained in the particle has a lower boiling point, and to have a large average particle size in the case where the compound has a higher boiling point. The water-based insecticidal composition used in the present invention contains the above three components in suitable proportions, and the average particle size of the diffused vapor particles does not depend only on the boiling point of the glycol ether compound and/or glycol compound. However, in order to achieve the above behavior, as the glycol ether compound and/or glycol compound, one that has the above boiling point (150-300°C, preferably 200-260°C) is selected.

The content of the glycol ether compound which is diethylene glycol monoalkyl ether and/or glycol compound in the water-based insecticidal composition is 30-60 mass%. If the content is less than 10 mass%, not only is it difficult to prepare a water-based formulation of the water-based insecticidal composition, but also the sustainability of the flying insect pest control effect is poor. Meanwhile, if the content is more than 70 mass%, not only are the effect of killing flying insect pests and the effect of preventing flying insect pests from entering indoors no longer enhanced, but also the risk of catching fire increases, and therefore, the advantage of being a water-based formulation is likely to be impaired.

Various other components may be added to the water-based insecticidal composition. For example, repellent components such as DEET, terpene compounds, and natural essential oils, antibacterial agents, antifungal agents, stabilizers such as dibutylhydroxytoluene (BHT) and methyl parahydroxybenzoate, pH adjusting agents, coloring agents, deodorants such as tea extracts and tea leaf dry distilled solutions, etc., may be added as appropriate. In preparation of the water-based insecticidal composition, lower alcohols such as ethanol and isopropanol, hydrocarbon solvents such as kerosene, ester or ether solvents, solubilizers, and dispersants may be used as appropriate in amounts such that the advantages of the water-based formulation are not impaired.

The water-based insecticidal composition thus prepared is placed in a container body (not shown) equipped with a thermal vaporization/diffusion absorbent wick, so that an insect pest control product (liquid mosquito killer) is constructed. The insect pest control product is configured such that the concentration of the pyrethroid insecticidal component contained in diffused vapor particles one hour after the start of vaporization and diffusion of the water-based insecticidal composition from the thermal vaporization/diffusion absorbent wick is higher than the concentration of the pyrethroid insecticidal component contained in diffused vapor particles immediately after the start of the vaporization and diffusion, and the diffused vapor particles have an average particle size of 0.2-2.5 um. Once such diffused vapor particles have been formed, the diffused vapor particles are carried by an air flow to form an air curtain, and exhibit behavior such that the diffused vapor particles have increased opportunities of contacting flying insect pests and an enhanced effect of preventing flying insect pests from entering indoors. As a result, even when the insect pest control product is used in a space of a room with an open window or door in a side wall thereof, flying insect pests are effectively prevented from entering the room space from the outside of the room, and a superior flying insect pest control effect is sustained over a long period of time. Incidentally, the flying insect pest control effect of the insect pest control product is at least sustainable for 30-90 days in a room of 6 Jyo (Jyo is a Japanese unit of area: 1 Jyo is equal to approximately 1.7 m$^2$) (25 m$^3$). Note that the insect pest control product is typically used for about 6-15 hours a day, although such a duration varies depending on the region or season in which the product is used.

A characteristic behavior of diffused vapor particles generated by the insect pest control product will be more specifically described. The average particle size of diffused vapor particles of the water-based insecticidal composition is reduced from about 5 um immediately after vaporization and diffusion to 0.2-2.5 um, which is a particle size that allows the diffused vapor particles to easily contact flying insect pests, more preferably 0.5-2.0 um. The concentration of the pyrethroid insecticidal component in the diffused vapor particles is adjusted such that as the average particle size decreases, the concentration increases from 0.1-3 wt%, which is the initial concentration, to 0.15-54 wt% (i.e., 1.5-18 times as high), preferably 0.2-27 wt% (i.e., 2-9 times as high). This is partly because water, which is easily vaporized and diffused, of the three components, is gradually released and diffused from the diffused vapor particles due to thermal vaporization and diffusion. Meanwhile, at least while the diffused vapor particles are suspended in a space of a room, a predetermined amount of water continues to remain in the diffused vapor particles, and therefore, characteristics of the water-based insecticidal composition are maintained until the end. In the form of the liquid mosquito killer, these actions may synergistically interact to continuously form an air flow (air curtain) of the diffused vapor particles containing an effective amount of the pyrethroid insecticidal component at or near the inner side of a window or door, so that diffused vapor particles may have increased opportunities of contacting flying insect pests and an enhanced effect of preventing flying insect pests from entering indoors. As a result, flying insect pests may be prevented from entering indoors from the outside.

Meanwhile, the present inventors have found that in the case of a kerosene-based formulation (i.e., an oil-based formulation), the effect of killing flying insect pests is substantially similar to that of a water-based formulation, and the effect of preventing flying insect pests from entering is considerably inferior. This may, for example, be because diffused vapor particles of an oil-based formulation have an average particle size of as small as about 0.05-0.5 $\mu$m, and therefore, are easily dissipated at or near the inner side of a window or door, so that an effective air curtain is unlikely to be formed, and in addition, have a small increase in the concentration of the pyrethroid insecticidal component, whereas diffused vapor particles of a water-based formulation have a characteristic increase in the concentration of the pyrethroid insecticidal component.

The container for containing the water-based insecticidal composition is typically made of a plastic such as a polyolefin (e.g., polypropylene), a polyester, or polyvinyl chloride. An absorbent wick is attached to a top portion of the chemical liquid container through a stopper. In the case of a water-based formulation, the chemical liquid container is preferably made of a polyolefin plastic such as polypropylene, taking into account the physical properties of the glycol ether compound and/or glycol compound.

Incidentally, thermal vaporization/diffusion absorbent wicks for liquid mosquito killers are typically roughly divided into baked wicks, porous ceramic wicks, braided wicks, and bound wicks. In the present invention, baked wicks are used. In the description that follows, a case where a baked wick or braided wick is used as the thermal vaporization/diffusion absorbent wick will be described. Note that materials for the thermal vaporization/diffusion absorbent wick are stable with respect to the water-based insecticidal composition containing the pyrethroid insecticidal component, and can absorb an aqueous solution through capillary action.

A baked wick is obtained by baking a mixture of (a) an inorganic powder, (b) an inorganic binder, and (c) an organic substance (a carbonaceous powder, an organic binder, etc.) at 600-2000°C. A wick that contains a small amount of (b) and (c) and is mostly formed of (a), is typically called a porous ceramic wick.

Examples of the inorganic powder include mica, alumina, silica, talc, mullite, cordierite, and zirconia. Of them, mica is preferable, particularly because it can impart relatively uniform fine pores to a liquid mosquito killer absorbent wick. The above inorganic powders may be used alone or in combination. The content of the inorganic powder in the thermal vaporization/diffusion absorbent wick is preferably 10-90 mass%, more preferably 30-70 mass%. The inorganic powder is preferably fine powder of 50 mesh or finer in terms of physical properties such as external appearance, liquid absorption capability, and strength, unless a treatment such as pulverization is involved in the process of producing the thermal vaporization/diffusion absorbent wick.

Examples of the inorganic binder include clays such as kaolinite, bentonite, and halloysite, tar pitch, and water glass. Of them, clays are preferable because they have good binding capability. The above inorganic binders may be used alone or in combination. The content of the inorganic binder in the thermal vaporization/diffusion absorbent wick is preferably 5-50 mass%, more preferably 10-40 mass%. The inorganic binder has poor binding action at room temperature, and acquires sufficient binding action by being baked at 600-2000°C, so that it can be preferably used in the thermal vaporization/diffusion absorbent wick.

**EP 3 566 578 B1**

Examples of the organic substance include carbonaceous powders such as graphite, carbon black, activated carbon, charcoal, and coke, or organic binders such as carboxymethyl cellulose (CMC), acrylic resins, and polyolefin resins. Of them, graphite is preferable because it has a relatively uniform shape and contains less impurities. By adding a carbonaceous powder such as graphite to the thermal vaporization/diffusion absorbent wick, the external appearance, color, liquid absorption capability, strength, etc., thereof can be improved. The above carbonaceous powders or organic binders may be used alone or in combination. The content of the organic substance in the thermal vaporization/diffusion absorbent wick is preferably 5-40 mass%. If the content is within this range, the generation of carbon monoxide or carbon dioxide during baking of the thermal vaporization/diffusion absorbent wick can produce continuous air holes in the thermal vaporization/diffusion absorbent wick, so that a porous structure that can exert sufficient liquid absorption performance through capillary action can be formed.

Note that, in addition to the above substances, the thermal vaporization/diffusion absorbent wick may additionally contain a preservative, and an antioxidant such as 4,4'-methylene bis(2-methyl-6-t-butylphenol) or stearyl-$\beta$-(3,5-dit-butyl-4-hydroxyphenyl)propionate, as appropriate.

A braided wick (not used in the present invention) is typically obtained by covering the outer peripheral surface of a core member with a sheath material for absorbing, vaporizing, and diffusing a water-based insecticidal composition, where the sheath material is formed as an aggregation of at least one type of fibers selected from natural fibers, synthetic fibers, and inorganic fibers. In braided wicks, the core member has the function of keeping the shape of the thermal vaporization/diffusion absorbent wick. The materials for the core member do not necessarily need to have the function of absorbing a water-based insecticidal composition. The core member may be made of, for example, a thermoplastic and/or thermosetting synthetic resin that can withstand temperatures of 130°C or more. Note that in order to enhance the shape retaining function, the thermoplastic and/or thermosetting synthetic resin of the core member may be reinforced using a fibrous reinforcing material such as glass fiber, ceramic fiber, or carbon fiber, a powder reinforcing material such as silica, alumina, or titanium oxide, which are called a glass powder or inorganic filler, or the like.

The sheath material is typically formed as an aggregation of fibers. The fiber aggregation includes one or more types of fibers. Examples of the fibers include natural fibers such as cotton, synthetic fibers such as polypropylene, polyester, nylon, and aramid, and inorganic fibers such as glass fiber and carbon fiber. Synthetic fibers that can withstand temperatures of 130°C or more such as polypropylene, polyester, nylon, and aramid are preferable. Such a fiber aggregation is typically made of a fiber material in the form of braid, woven fabric, knitted fabric, felt, nonwoven fabric, or the like. In this case, the fiber material may be treated with a surfactant so that the liquid absorption speed is adjusted. Furthermore, the surface of the sheath material may be covered with a varnish or the like, or may be treated so that a function such as hydrophilicity is imparted thereto.

The thermal vaporization/diffusion absorbent wick thus obtained is applied to a liquid mosquito killer in which the water-based insecticidal composition is thermally vaporized and diffused through the thermal vaporization/diffusion absorbent wick. Specifically, the water-based insecticidal composition is placed in a chemical liquid container, and a lower portion of the thermal vaporization/diffusion absorbent wick is put into the water-based insecticidal composition through a stopper. Thereafter, the water-based insecticidal composition in the container is transported to a top portion of the thermal vaporization/diffusion absorbent wick, is heated to 60-130°C by a heat generator provided at a top portion of a thermal vaporization/diffusion device, and is thereby vaporized and diffused into the atmosphere. The thermal vaporization/diffusion absorbent wick faces a hollow tube-shaped heat dissipation tube included in the heat generator with a space interposed therebetween. The surface temperature of the top portion of the thermal vaporization/diffusion absorbent wick is 80-150°C. If the heating temperature of the water-based insecticidal composition is excessively high, the water-based insecticidal composition is likely to be quickly vaporized and diffused, or the water-based insecticidal composition is likely to undergo pyrolysis or polymerization, leading to production of a high-boiling-point substance on the surface of the thermal vaporization/diffusion absorbent wick, which may be accumulated to clog the thermal vaporization/diffusion absorbent wick. Meanwhile, if the heating temperature is excessively low, it is difficult to vaporize and diffuse the water-based insecticidal composition, so that sufficient insect control performance cannot be achieved.

A positional relationship between the top portion (outer diameter: 6.7-7.3 mm) of the thermal vaporization/diffusion absorbent wick and the internal wall (inner diameter: 10 mm, height: 8-12 mm) of the heat dissipation tube facing the wick is, but indirectly, related to the entrance prevention effect of the insect pest control product. Specifically, the ratio (a/b) of a length (a) of the top portion of the thermal vaporization/diffusion absorbent wick facing the inner wall of the heat dissipation tube to a height (b) of the inner wall of the heat dissipation tube can be changed by moving the top portion of the thermal vaporization/diffusion absorbent wick upward or downward. In an insect pest control product, if the ratio (a/b) is more than 1.0, the top portion of the thermal vaporization/diffusion absorbent wick protrudes from the top end of the heat dissipation tube. Note that if the ratio (a/b) is more than 1.0, the amount per unit time of the pyrethroid insecticidal component vaporized and diffused increases, and the uniformity of the average particle size of the diffused vapor particles adversely decreases. The ratio (a/b) is set to 0.7-0.8 in the invention.

The thermal vaporization/diffusion device used as the insect pest control product may be provided with various functions and members similar to those of conventional devices in addition to the above heat generator. For safety, a protective cap is provided over the heat generator. The protective cap has an opening at a center portion thereof. The size and shape of the opening ensures that the water-based insecticidal composition does not excessively condense or adhere to the protective cap or the device. For example, to provide a cylindrical vaporization/diffusion tube having an inner diameter of 10-30 mm, hanging vertically from near the opening, is effective. In this case, the distance between the lower end of the vaporization/diffusion tube and the top surface of the heat generator is preferably typically within the range of 1-5 mm in terms of the heat resistance and vaporization/diffusion performance of the vaporization/diffusion tube. The thermal vaporization/diffusion device may be additionally provided, as appropriate, with a power supply cord, on-off operation switch, pilot light, etc., which are coupled to the heat generator.

An insect pest control method of the present invention has practical insect killing efficacy, in indoor spaces such as living rooms, lounges, and bedrooms, on not only strains that are susceptible to pyrethroids, but also strains that have reduced susceptibility, of Culex (e.g., Culex pipiens pallens, Culex tritaeniorhynchus, Culex pipiens quinquefasciatus, and Culex pipiens molestus), Aedes (e.g., Aedes aegypti and Aedes albopictus), Chironomidae, etc, and other flying insect pests such as houseflies, drain flies, phorid flies, horseflies, black flies, and biting midges, and in addition, has the effect of efficiently preventing these insect pests from entering indoors from the outside. In particular, the insect pest control method has a significantly excellent effect of preventing mosquitoes from entering, and therefore, is considerably useful.

Examples

Next, the insect pest control product and insect pest control method of the present invention will be described in greater detail by way of the following Examples 1-2 and 5, Examples 3-4 and 6-15 being reference examples.

(Example 1)

A water-based insecticidal composition was prepared by mixing 0.9 mass% of transfluthrin, 50 mass% of diethylene glycol monobutyl ether (DEMB), 0.1 mass% of dibutylhydroxytoluene (BHT) as a stabilizer, and 49 mass% of purified water.

A thermal vaporization/diffusion absorbent wick (a round bar having a diameter of 7 mm and a length of 66 mm) was obtained as follows: water was added to a mixture of 52 mass% of mica powder as an inorganic powder, 33 mass% of kaolinite powder as an inorganic binder, 10 mass% of graphite as an organic substance, 3 mass% of carboxymethyl cellulose as an organic binder, and 2 mass% of starch, followed by kneading, the kneaded mixture was extruded while pressure was applied thereto, followed by air drying and then baking at 1100°C.

Forty-five milliliters of the water-based insecticidal composition was placed in a plastic container, and the thermal vaporization/diffusion absorbent wick was put into the container through a stopper. The container was attached to a thermal vaporization/diffusion device (e.g., a device disclosed in Japanese Patent No. 2926172 or the like, which is equipped with a hollow tube-shaped heat dissipation tube (inner diameter: 10 mm, height: 10 mm, and surface temperature: 137°C) around a top portion of the absorbent wick). Thus, an insect pest control product of Example 1 was constructed. Note that a length of the top portion of the thermal vaporization/diffusion absorbent wick facing the inner wall of the heat dissipation tube was 0.7 times as great as a height of the inner wall of the heat dissipation tube.

The insect pest control product of Example 1 was placed at the center of a 6-Jyo room (25 m³), and was used, with a window facing outdoors in one of the four side walls opened, while an electric current was passed through the heat generator for 12 hours per day. The average particle size of diffused vapor particles of the water-based insecticidal composition that were collected at a predetermined position was 1.2 μm, and the transfluthrin concentration of the diffused vapor particles at that time was 3.87 mass%, which is 4.3 times as high as the initial value 0.9 mass%. For 60 days (approximately 700 hours), no mosquitoes entered indoors through the window and bit a human.

(Examples 2 and 5; reference examples 3-4 and 6-15; and Comparative Examples 1-4)

Water-based insecticidal compositions and thermal vaporization/diffusion absorbent wicks used in Examples 2-15 were prepared in a manner similar to that for Example 1, and were loaded into respective thermal vaporization/diffusion devices to construct respective insect pest control products of Examples 2-15, for which measurements and tests were conducted for (1) to (4) described below. For comparison, similar measurements and tests were conducted on insect pest control products of Comparative Examples 1-4. The types and amounts of the components of the water-based insecticidal compositions and the thermal vaporization/diffusion absorbent wicks of the examples and the comparative examples, are shown in Table 1, including those of Example 1.

[Table 1]

| | | Water-based insecticidal composition (mass%) | | | | Vaporization/diffusion absorbent wick | | Ratio (a/b) |
|---|---|---|---|---|---|---|---|---|
| | | Insecticidal components | Glycol ether compounds/ glycol compounds | Other components | Water | Type | Main components (mass%) | |
| Examples | 1 | Transfluthrin 0.9 | DEMB 50 | BHT 0.1 | Balance | Baked | Mica powder 52 Kaolinite powder 33 Graphite 10, etc | 0.7 |
| | 2 | Transfluthrin 0.9 | DEMB 50 | BHT 0.1 | Balance | Baked | Mica powder 51 Kaolinite powder 35 Graphite 10, etc | 0.7 |
| | 3 | Metofluthrin 0.9 | DEMB 50 | BHT 0.1 | Balance | Baked | Mica powder 51 Kaolinite powder 35 Graphite 10, etc | 0.7 |
| | 4 | Profluthrin 0.9 | DEMB 50 | BHT 0.1 | Balance | Baked | Mica powder 51 Kaolinite powder 35 Graphite 10, etc | 0.7 |
| | 5 | Transfluthrin 0.9 | DEMB 50 | BHT 0.1 | Balance | Baked | Talc powder 42 Bentonite 31 Coke 13, etc. | 0.8 |
| | 6 | Transfluthrin 0.9 | DEMB 50 | BHT 0.1 | Balance | Braided | Polyester/polyamide | 0.4 |
| | 7 | Transfluthrin 0.9 | DEMB 50 | BHT 0.1 | Balance | Braided | Polyester/polypropylene | 0.2 |
| | 8 | Metofluthrin 0.5 | DEMB 50 | BHT 0.1 | Balance | Baked | Polyester/polyamide | 1.0 |
| | 9 | Transfluthrin 0.9 | DPMP 70 | Tea leaf dry distilled solution 0.1 | Balance | Baked Ceramic | Mullite, etc. | 0.6 |
| | 10 | Metofluthrin 0.15 Terallethrin 0.8 | DEMB 30 DEMB 30 | BHT 0.1 | Balance | Baked Ceramic | Mullite Cordierite, etc | 0.9 |
| | 11 | Transfluthrin 0.9 | DEMPh 50 | BHT 0.1 Aroma chemical Small amount | Balance | Baked | Talc powder 47 Kaolinite powder 33 Acrylic resin 11, etc | 0.15 |
| | 12 | Transfluthrin 0.9 | DEMP 75 | BHT 0.1 | Balance | Braided | Polyester/polyamide | 0.7 |
| | 13 | Metofluthrin 0.5 | HG 30 | BHT 0.1 | Balance | Felt | Felt | 0.7 |
| | 14 | Transfluthrin 0.9 | DEMH 75 | BHT 0.1 | Balance | Braided | Polyester/polypropylene | 0.4 |
| | 15 | Metofluthrin 0.5 | DEMP 18 | BHT 0.1 | Balance | Braided | Polyester/polyamide | 0.7 |
| Comparative examples | 1 | Metofluthrin 0.5 | Glycol ether A* 70 | BHT 0.1 | Balance | Braided | Polyester/polyamide | 1.0 |
| | 2 | Transfluthrin 0.9 | Glycol ether B** 50 | BHT 0.1 | Balance | Baked | Mica powder 51 Kaolinite powder 35 Graphite 10, etc | 0.7 |
| | 3 | dl, d-T80-allethrin 2.0 | DEMB 50 | BHT 0.1 | Balance | Baked | Mica powder 51 Kaolinite powder 35 Graphite 10, etc | 0.7 |
| | 4 | Transfluthrin 0.9 | Kerosene balance | BHT 0.1 | – | Baked | Mica powder 51 Kaolinite powder 35 Graphite 10, etc | 0.7 |

\* Glycol ether A: ethylene glycol monomethyl ether (boiling point 124° C)
\*\* Glycol ether B: diethylene glycol monobenzyl ether (boiling point 302° C)

(1) Average Particle Size

Two plastic cylinders each having an inner diameter of 20 cm and a height of 43 cm were put on top of each other.

The stack of the two cylinders was placed on a circular plate provided on a table with a rubber gasket interposed between the cylinder stack and the circular plate. The circular plate had a 5-cm circular hole at the center thereof. A thermal vaporization/diffusion device to be tested was placed on the circular hole, and heating was performed through passage of an electric current. Diffused vapor particles were captured using a microscopic glass coated with silicone oil, which was placed near an upper-end opening of the cylinder, i.e. at a position one meter away from the thermal vaporization/diffusion device. The particle size was measured by microscopy.

(2) Vaporization and Diffusion Performance

An insect pest control product to be tested was placed at the center of a 6-Jyo room (25 m$^3$), and heating was conducted through passage of an electric current. At an early part of the period of use (day 2), diffused vapor particles were trapped using a silica gel-filled column placed at a position one meter above the thermal vaporization/diffusion device. The insecticidal component was extracted using acetone, and analyzed by gas chromatography, to determine the amount of the insecticidal component vaporized and diffused per unit time. A device identical to that described above in Section (1), except that the upper-end opening of the cylinder was hermetically sealed using a polypropylene sheet having a known weight was used, and heating was conducted through passage of an electric current for 1 h. The liquid amount of all diffused vapor particles adhering to the polypropylene sheet was measured, and the concentration of the insecticidal component in the diffused vapor particles was measured, and how many times as high that concentration is as the initial concentration of the insecticidal component was calculated.

(3) Insect Killing Efficacy Test

Two plastic cylinders each having an inner diameter of 20 cm and a height of 43 cm were put on top of each other. Another cylinder having an inner diameter of 20 cm and a height of 20 cm (insects to be tested were to be placed) was put on top of the stack of the two cylinders with a 16-mesh metal mesh interposed therebetween. Still another cylinder having the same inner diameter and a height of 20 cm was put on top of the third cylinder with a similar 16-mesh metal mesh interposed therebetween. The stack of the four cylinders was placed on a circular plate provided on a table with a rubber gasket interposed between the cylinder stack and the circular plate. The circular plate had a 5-cm circular hole at the center thereof. A thermal vaporization/diffusion device was placed on the circular hole, and heating was performed through passage of an electric current. After four hours of passage of an electric current, approximately 20 adult female Culex pipiens pallens mosquitoes (insects to be tested) were released in the second uppermost cylinder, and the number of tested insects which fell down to be flat on their back as time passed was counted to calculate the KT$_{50}$ value. After 20 minutes of exposure, all of the tested insects were collected. The fatality rate of the insects was investigated 24 hours later. The insect killing efficacy test was conducted at an early part of the period of use (day 2) and a late part of the period of use (several days before the end of the lifespan).

(4) Entrance Prevention Ratio

A window is provided at a boundary between two adjacent 10-Jyo living rooms, which were each hermetically sealed, except for the window. An insect pest control product to be tested was placed in one of the two living rooms, and an observer spent time in that room while heating was conducted through passage of an electric current, and that room is referred to as a "chemical agent-treated section." A hundred adult female Culex pipiens pallens mosquitoes, which were an insect to be tested, were released in the adjacent insect-released non-chemical agent section. The number of insects to be tested that entered from the insect-released non-chemical agent section into the chemical agent-treated section through the window was counted for 60 min by observation. In order to set a criterion for determination of an effect, a similar test was conducted without using an insect pest control product in a non-treated control section). The entrance prevention test was conducted twice: at an early part of the period of use (day 2); and at a late part of the period of use (several days before the end of the lifespan) of an insect pest control product to be tested. For the non-treated control section, a similar test was conducted twice. The average of the number of entering insects was calculated. An entrance prevention ratio was calculated as follows.

$$\text{Entrance prevention ratio (\%)} = (C - T)/C \times 100$$

C: the average of the number of insects entering the non-treated control section for 60 min
T: the average of the number of insects entering the chemical agent-treated section for 60 min

The results of the measurement and test on the examples and comparative examples are shown in Table 2.

[Table 2]

[Table 2]

|  |  | Average particle size (µm) | Vaporization and diffusion performance | | Insect killing efficacy test | | | | Entrance prevention ratio (%) | |
|---|---|---|---|---|---|---|---|---|---|---|
|  |  |  | Vaporization amount of insecticidal component (mg/h) | Increase factor of insecticidal component concentration (times) | Early part of period of use | | Late part of period of use | | Early part of period of use | Late part of period of use |
|  |  |  |  |  | KT$_{50}$ (seconds) | Fatality rate (%) | KT$_{50}$ (seconds) | Fatality rate (%) |  |  |
| Examples | 1 | 1.2 | 0.55 | 4.3 | 105 | 100 | 119 | 100 | 100 | 100 |
|  | 2 | 1.1 | 0.56 | 4.3 | 105 | 100 | 120 | 100 | 100 | 100 |
|  | 3 | 1.3 | 0.35 | 5.4 | 104 | 100 | 116 | 100 | 94 | 88 |
|  | 4 | 1.0 | 0.54 | 4.5 | 109 | 100 | 133 | 100 | 90 | 85 |
|  | 5 | 0.9 | 0.51 | 5.0 | 113 | 100 | 135 | 100 | 100 | 100 |
|  | 6 | 1.5 | 0.57 | 3.9 | 106 | 100 | 124 | 100 | 100 | 97 |
|  | 7 | 0.5 | 0.66 | 4.8 | 98 | 100 | 142 | 100 | 100 | 100 |
|  | 8 | 0.6 | 0.34 | 5.7 | 112 | 100 | 127 | 100 | 92 | 84 |
|  | 9 | 0.2 | 0.60 | 4.3 | 127 | 100 | 140 | 100 | 93 | 83 |
|  | 10 | 1.1 | Metofluthrin 0.11 Terallethrin 0.52 | 7.6 | 126 | 100 | 149 | 100 | 90 | 81 |
|  | 11 | 2.1 | 0.68 | 1.9 | 93 | 100 | 143 | 100 | 88 | 80 |
|  | 12 | 0.15 | 0.54 | 3.0 | 90 | 100 | 162 | 70 | 87 | 73 |
|  | 13 | 3.0 | 0.56 | 10.5 | 82 | 100 | 196 | 65 | 84 | 71 |
|  | 14 | 1.3 | 0.61 | 1.4 | 101 | 100 | 145 | 100 | 89 | 74 |
|  | 15 | 0.9 | 0.37 | 17.2 | 96 | 100 | 187 | 60 | 83 | 72 |
| Comparative examples | 1 | 0.3 | 0.41 | 12.1 | 96 | 100 | 194 | 50 | 74 | 43 |
|  | 2 | 1.8 | 0.37 | 1.7 | 175 | 60 | 210 | 45 | 76 | 45 |
|  | 3 | 1.9 | 0.73 | 3.6 | 248 | 45 | 319 | 25 | 60 | 34 |
|  | 4 | 0.1 | 0.55 | 1.2 | 131 | 95 | 145 | 90 | 77 | 52 |

12

According to the results of Tables 1 and 2, it was confirmed that the present invention provides stable vaporization and diffusion performance, and excellent insect killing efficacy, and when applied to a space of a room with an open window or door in a side wall thereof, can effectively prevent flying insect pests from entering the space of the room from the outside of the room. In addition, the average particle size of diffused vapor particles was reduced from 5.0 um immediately after being generated, to 0.2-2.5 um, as time passed immediately after being vaporized and diffused while the particles were suspended in the room space. The transfluthrin formulation particularly had an excellent entrance prevention effect. In the case where the boiling point of the glycol ether compound and/or glycol compound did not fall within the range of the present invention (Comparisons 1 and 2), the case where the vapor pressure of the pyrethroid insecticidal component did not fall within the range of the present invention (Comparison 3), and the case where an oil-based formulation was used instead of a water-based formulation (Comparison 4), a sufficient entrance prevention effect was not obtained.

As described above, the effect of preventing flying insect pests from entering indoors is a concept totally different from that of conventional insect killing effects, which are mainly attributed to the chemical liquid formulation. The entrance prevention effect is significantly attributed not only to the chemical liquid formulation but also to the behavior of the diffused vapor particles. Specifically, the liquid mosquito killer is adapted so that the average particle size of diffused vapor particles of the water-based insecticidal composition gradually decreases, and the pyrethroid insecticidal component concentration of the diffused vapor particles gradually increases, over time, immediately after being vaporized and diffused while the particles are suspended in a room space. The diffused vapor particles continuously form an air flow (air curtain) containing an effective amount of the pyrethroid insecticidal component at or near the inner side of a window or door. It was demonstrated that the diffused vapor particles behave so as to increase opportunities of contacting flying insect pests and enhance the effect of preventing flying insect pests from entering, and as a result, even when applied to a space of a room with an open window or door in a side wall thereof, the insect pest control product can effectively prevent flying insect pests from entering the room space from the outside of the room. Meanwhile, it was found that in the case where a kerosene-based formulation (oil-based formulation) was used, an insect killing effect similar to that of a water-based formulation was obtained, and the entrance prevention effect was inferior. This may be because when the average particle size of diffused vapor particles of the oil-based formulation becomes about 0.05-0.5 um, the diffused vapor particles are easily dissipated at or near the inner side of a window or door, so that an effective air curtain is unlikely to be formed, and characteristic beneficial effects of the water-based formulation such as an increase in the concentration of the pyrethroid insecticidal component in the diffused vapor particles are not obtained.

INDUSTRIAL APPLICABILITY

The present invention is applicable as a method of using an insect pest control product for humans and pets, and has other applications, such as insecticidal, acaricidal, sterilizing, antimicrobial, deodorizing, and antibromic applications.

**Claims**

1. An insect pest control method of using an insect pest control product comprising a thermal vaporization/diffusion absorbent wick for vaporizing and diffusing a water-based insecticidal composition, the method comprising:

   putting the thermal vaporization/diffusion absorbent wick in the water-based insecticidal composition so that the water-based insecticidal composition is absorbed and transported to a top portion of the thermal vaporization/-diffusion absorbent wick, and
   heating the top portion of the thermal vaporization/diffusion absorbent wick at 80 to 150°C so that a pyrethroid insecticidal component is vaporized and diffused into the atmosphere,
   wherein the thermal vaporization/diffusion absorbent wick is a baked wick,
   wherein the water-based insecticidal composition contains 0.1 to 3.0 mass% of the pyrethroid insecticidal component which is transfluthrin, 30 to 60 mass% of a glycol ether compound which is diethylene glycol monoalkyl ether and/or a glycol compound, said compounds having a boiling point of 150 to 300°C, and water,
   wherein the product further comprises a hollow tube-shaped heat generator for heating the thermal vaporization/diffusion absorbent wick with the heat generator surrounding the absorbent wick,
   wherein a surface temperature of the hollow tube-shaped heat generator is set to 80 to 150°C,
   wherein an average gap distance between an outer surface of the thermal vaporization/diffusion absorbent wick and an inner surface of the hollow tube-shaped heat generator is set to 1.2 to 1.8 mm,
   wherein an inner diameter of an inner wall of the hollow tube-shaped heat generator is 10 mm and a height (b) of the hollow tube-shaped heat generator is set to 8 to 12 mm, and
   wherein a ratio (a)/(b) of a length (a) of the top portion of the thermal vaporization/diffusion absorbent wick facing the inner wall of the hollow tube-shaped heat generator to the height (b) of an inner wall of the hollow tube-shaped heat generator is 0.7 to 0.8 while a concentration of the pyrethroid insecticidal component in diffused vapor particles one hour after the start of vaporization and diffusion is 1.5 to 18 times as high as a concentration of the pyrethroid insecticidal component in diffused vapor particles of initial vaporization and diffusion.

2. The insect pest control method of claim 1, **characterized in that**
said boiling point is 200 to 260°C.

**Patentansprüche**

1. Verfahren zur Schadinsektenbekämpfung unter Verwendung eines Schadinsektenbekämpfungsprodukts, das einen absorbierenden Docht zur thermischen Verdampfung/Diffusion umfasst, um eine Insektizidzusammensetzung auf Wasserbasis zu verdampfen und diffundieren, wobei das Verfahren umfasst:

Platzieren des absorbierenden Dochts zur thermischen Verdampfung/Diffusion in der Insektizidzusammensetzung auf Wasserbasis, so dass die Insektizidzusammensetzung auf Wasserbasis absorbiert und zu einem oberen Abschnitt des absorbierenden Dochts zur thermischen Verdampfung/Diffusion transportiert wird, und Erhitzen des oberen Abschnitts des absorbierenden Dochts zur thermischen Verdampfung/Diffusion bei 80 bis 150 °C, so dass ein Pyrethroidinsektizidbestandteil verdampft und in die Atmosphäre diffundiert wird,
wobei der absorbierende Docht zur thermischen Verdampfung/Diffusion ein gebackener Docht ist,
wobei die Insektizidzusammensetzung auf Wasserbasis den Pyrethroidinsektizidbestandteil, bei dem es sich um Transfluthrin handelt, zu 0,1 bis 3,0 Masse-%, eine Glykoletherverbindung, bei der es sich um Diethylenglykolmonoalkylether und/oder eine Glykolverbindung handelt, zu 30 bis 60 Masse-%, wobei die Verbindungen einen Siedepunkt von 150 bis 300 °C aufweisen, und Wasser enthält,
wobei das Produkt ferner einen hohlröhrenförmigen Wärmeerzeuger zum Erhitzen des absorbierenden Dochts zur thermischen Verdampfung/Diffusion umfasst, wobei der Wärmeerzeuger den absorbierenden Docht umgibt, wobei eine Oberflächentemperatur des hohlröhrenförmigen Wärmeerzeugers auf 80 bis 150 °C festgelegt ist, wobei ein durchschnittlicher Zwischenraum zwischen einer Außenfläche des absorbierenden Dochts zur thermischen Verdampfung/Diffusion und einer Innenfläche des hohlröhrenförmigen Wärmeerzeugers auf 1,2 bis 1,8 mm festgelegt ist,
wobei ein Innendurchmesser einer Innenwand des hohlröhrenförmigen Wärmeerzeugers 10 mm beträgt und eine Höhe (b) des hohlröhrenförmigen Wärmeerzeugers auf 8 bis 12 mm festgelegt ist, und
wobei ein Verhältnis von (a)/(b) einer Länge (a) des oberen Abschnitts des absorbierenden Dochts zur thermischen Verdampfung/Diffusion, der der Innenwand des hohlröhrenförmigen Wärmeerzeugers zugewandt ist, zu der Höhe (b) einer Innenwand des hohlröhrenförmigen Wärmeerzeugers 0,7 bis 0,8 beträgt, wobei eine Konzentration des Pyrethroidinsektizidbestandteils in den diffundierten Dampfpartikeln eine Stunde nach dem Beginn der Verdampfung und Diffusion 1,5- bis 18-mal so hoch wie eine Konzentration des Pyrethroidinsektizidbestandteils in den diffundierten Dampfpartikeln einer anfänglichen Verdampfung und Diffusion beträgt.

2. Verfahren zur Schadinsektbekämpfung nach Anspruch 1, **dadurch gekennzeichnet, dass**
sich der Siedepunkt auf 200 bis 260 °C beläuft.

**Revendications**

1. Procédé de lutte contre des insectes nuisibles utilisant un produit de lutte contre des insectes nuisibles comprenant une mèche absorbante d'évaporation/de diffusion thermique pour évaporer et diffuser une composition insecticide à base d'eau, le procédé comprenant :

la mise de la mèche absorbante d'évaporation/de diffusion thermique dans la composition insecticide à base d'eau de façon que la composition insecticide à base d'eau soit absorbée et transportée vers une portion supérieure de la mèche absorbante d'évaporation/de diffusion thermique, et
le chauffage de la portion supérieure de la mèche absorbante d'évaporation/de diffusion thermique à une température de 80 à 150°C de façon qu'un composant insecticide pyréthroïde soit évaporé et diffusé dans l'atmosphère,
dans lequel la mèche absorbante d'évaporation/de diffusion thermique est une mèche cuite,
dans lequel la composition insecticide à base d'eau contient 0,1 à 3,0 % en masse du composant insecticide pyréthroïde qui est la transfluthrine, 30 à 60 % en masse d'un composé éther de glycol qui est un éther monoalkylique de diéthylèneglycol et/ou d'un composé de glycol, lesdits composés ayant un point d'ébullition de 150 à 300°C, et de l'eau,

dans lequel le produit comprend en outre un générateur de chaleur en forme de tube creux pour chauffer la mèche absorbante d'évaporation/de diffusion thermique avec le générateur de chaleur entourant la mèche absorbante,

dans lequel la température de surface du générateur de chaleur en forme de tube creux est établie à une valeur de 80 à 150°C,

dans lequel la distance moyenne de l'espace entre la surface extérieure de la mèche absorbante d'évaporation/de diffusion thermique et la surface intérieure du générateur de chaleur en forme de tube creux est établie à une valeur de 1,2 à 1,8 mm,

dans lequel le diamètre intérieur de la paroi intérieure du générateur de chaleur en forme de tube creux est de 10 mm et la hauteur (b) du générateur de chaleur en forme de tube creux est établie à une valeur de 8 à 12 mm, et

dans lequel le rapport (a)/(b) de la longueur (a) de la portion supérieure de la mèche absorbante d'évaporation/de diffusion thermique faisant face à la paroi intérieure du générateur de chaleur en forme de tube creux à la hauteur (b) de la paroi intérieure du générateur de chaleur en forme de tube creux est de 0,7 à 0,8 tandis que la concentration du composant insecticide pyréthroïde dans les particules de vapeur diffusées une heure après le début de l'évaporation et de la diffusion est de 1,5 à 18 fois la concentration du composant insecticide pyréthroïde dans les particules de vapeur diffusées lors de l'évaporation et de la diffusion initiales.

2. Procédé de lutte contre des insectes nuisibles selon la revendication 1, **caractérisé en ce que** ledit point d'ébullition est de 200 à 260°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005095107 A
- WO 2016167209 A1
- WO 2016140172 A1
- US 2013303610 A1
- AU 2012200592 A1
- JP H11103750 A
- EP 3409117 A1
- WO 2017130920 A1
- JP H037207 A
- JP 2926172 B